# EUROPEAN PATENT SPECIFICATION

(11) **EP 1 664 173 B1**
(45) Date of publication and mention of the grant of the patent: **11.06.2008**
(21) Application number: 04781359.7
(22) Date of filing: 18.08.2004
(51) Int. Cl.: C08K 5/00, C08K 5/20, C08K 5/34, C08K 5/315, C08K 5/45, C08K 5/15, C08K 5/41, C08K 5/46, C08K 5/39, C08K 5/07

(54) **METHOD FOR REDUCING THE ACETALDEHYDE LEVEL IN POLYESTERS**
VERFAHREN ZUR VERRINGERUNG DES ACETALDEHYDGEHALTS IN POLYESTERN
PROCEDE DE REDUCTION DU NIVEAU D'ACETALDEHYDE DANS DES POLYESTERS

(30) Priority: 10.09.2003 US 659225
(43) Date of publication of application: 07.06.2006
(73) Proprietor: EASTMAN CHEMICAL COMPANY, Kingsport, TN 37660 (US)
(72) Inventor: PEARSON, Jason, Clay, Kingsport, TN 37663 (US); WEAVER, Max, Allen, Kingsport, TN 37664 (US); CYR, Michael, John, League City, TX 77573 (US)
(74) Representative: Wibbelmann, Jobst
(86) International application number: PCT/US2004/026649
(87) International publication number: WO 2005/026248

(56) References cited:
- EP-A- 0 302 289
- EP-A- 0 400 936
- EP-A- 1 110 999
- WO-A-00/59993
- FR-A- 2 502 162
- FR-A- 2 764 607
- GB-A- 1 023 213
- US-A- 3 177 101
- US-A- 4 362 829
- US-A- 5 663 029
- US-A1- 2003 113 568
- DATABASE WPI Section Ch, Week 199012 Derwent Publications Ltd., London, GB; Class A23, AN 1990-087763 XP002306052 -& JP 02 041354 A (TORAY IND INC) 9 February 1990 (1990-02-09)
- DATABASE WPI Section Ch, Week 198224 Derwent Publications Ltd., London, GB; Class A60, AN 1982-48951E XP002306053 -& JP 57 073049 A (ADEKA ARGUS IND KK) 7 May 1982 (1982-05-07)
- DATABASE WPI Section Ch, Week 199015 Derwent Publications Ltd., London, GB; Class A23, AN 1990-111204 XP002306054 -& JP 02 060956 A (TORAY IND INC) 1 March 1990 (1990-03-01)
- DATABASE WPI Section Ch, Week 199012 Derwent Publications Ltd., London, GB; Class A23, AN 1990-086462 XP002306055 -& JP 02 038445 A (TORAY IND INC) 7 February 1990 (1990-02-07)
- DATABASE WPI Section Ch, Week 199149 Derwent Publications Ltd., London, GB; Class A26, AN 1991-358685 XP002306056 -& JP 03 241357 A (SUMITOMO BAKELITE CO) 28 October 1991 (1991-10-28)
- DATABASE WPI Section Ch, Week 199846 Derwent Publications Ltd., London, GB; Class A18, AN 1998-537769 XP002306057 -& JP 10 237444 A (AICELLO CHEM CO LTD) 8 September 1998 (1998-09-08)

## Description

### FIELD OF THE INVENTION

This invention relates to the field of polyester chemistry. In particular, it relates to methodology for reducing the acetaldehyde in polyesters, in particular, poly(ethylene terephthalate).

### BACKGROUND OF THE INVENTION

Polyesters, especially poly(ethylene terephthalate) (PET) are versatile polymers that enjoy wide applicability as fibers, films, and three-dimensional structures. A particularly important application for PET is for containers, especially for food and beverages. This application has seen enormous growth over the last 20 years, and continues to enjoy increasing popularity. Despite this growth, PET has some fundamental limitations that restrict its applicability. One such limitation is its tendency to generate acetaldehyde (AA) when it is melt processed. Because AA is a small molecule, AA generated during melt processing can migrate through the PET. When PET is processed into a container, AA will migrate over time to the interior of the container. Although AA is a naturally occurring flavorant in a number of beverages and food products, for many products, the taste imparted by AA is considered undesirable. For instance, AA will impart a fruity flavor to water, which detracts from the clean taste desired for this product.

Historically, the impact of AA on product taste has been minimized by careful control of the melt processing conditions used to make containers or preforms, and by use of special processing conditions in polymer preparation. This approach is successful for most packages, where the taste threshold for AA is sufficiently high, or where the useful life of the container is sufficiently short. For other applications, where the desired shelf-life of the container is longer, the product is more sensitive to off-taste from AA, or the prevailing environmental conditions are warmer, it is not possible to keep the AA level below the taste threshold by using these methods. For example, in water, the taste threshold is considered to be less than about 40 mu/L (ppb), and often a shelf life of up to two years is desired. For a PET bottle that can contain 600 ml of beverage, a preform AA content of 8 ppm can result in a beverage AA level, greater than 40 ppb in as little as one month.

In addition to careful control of melt-processing conditions for PET, prior art methods include modifications to the injection molding process to minimize the thermal and shear heating of the PET; use of lower inherent viscosity (IV) resins, and the use of lower melting PET resins. Each of these approaches has been only partially successful, and each suffers from their own limitations. For example, specially designed injection molding equipment entail higher capital cost for the equipment. Lower IV resins produce containers that are less resistant to environmental factors such as stress crack failure. Lower melting resins are achieved by increasing the copolymer content the PET resin. Increasing the copolymer content also increases the stretch ratio of the PET, which translates into decreased productivity in injection molding and blow molding.

Another approach has been to incorporate additives into PET that will selectively react with, or scavenge, the AA that is generated. (See U.S. Patent No. 4,837,115). U.S. Patent Nos. 5,258,233; 5,650,469; 5,340,884; and No. 5,266,416 disclose the use of various polyamides, especially low molecular weight polyamides. WO 97/28218 discloses the use of polyesteramides. These polyamides and polyesteramides are believed to react with AA in the same manner as described in U.S. Patent No. 4,837,115.

U.S. Patent No. 6,274,212 discloses the use of an organic additive comprising at least two hydrogen-substituted heteroatoms bonded to carbons of the organic additive compound such that the organic additive compound is reactive with acetaldehyde in the polyester to form water and the resulting organic compound. The resulting organic compound comprises an unbridged five or six member ring including the at least two heteroatoms. These organic additives are believed to react with acetaldehyde by a two-step process to make an aliphatic ring structure.

While these AA scavengers are effective at reducing the AA content of melt-processed PET, they suffer from their own drawbacks. In particular, relatively high loadings of the polyamides are needed to effect significant AA reductions, and a very significant yellowing of the PET occurs on incorporation of these amine-containing additives. This color formation is believed to be due to the color of the imine group itself, and is thus unavoidable. The yellow color formation inherently limits this approach to articles where the PET can be tinted to mask the color. Unfortunately, most PET articles in use today are clear and uncolored. All of the current AA scavengers contain within their structure either a primary or secondary amine that can react with the PET at process temperature to form an amide linkage that renders the AA scavenger less effective

Active methylenes are reacted with aldehydes in the presence of a catalyst to make methine light absorbing compounds, including UV absorbers and colorants. A large number of active methylenes have been developed for this purpose as exemplified by Weaver et al. in U.S. Patent Nos. 5,376,650; 5,532,332; 5,274,072; 5,254,625; 5,086,161; and 5,030,708. The resulting methine dyes and ultraviolet light absorbers have been used to color polyesters and to impart UV absorbing properties.

### SUMMARY OF THE INVENTION

Provided are additives for polyester compositions that impart improved flavor retaining properties. More particularly, the present invention relates to a poly(ethylene terephthalate)/active methylene composition in which the concentration of acetaldehyde that is contained in the polyester is reduced. In one embodiment, the poly(ethylene terephthalate) is melt blended with the active methylene compound. Reducing the amount of acetaldehyde in the polyethylene terephthalate improves the flavor and fragrance of foodstuff that is packaged in a container comprising the composition of the present invention.

### DETAILED DESCRIPTION OF THE INVENTION

In a first embodiment, the present invention provides a polyester composition comprising:
(a) a polyester; and
(b) at least one additive that is capable of reacting with acetaldehyde to form a new carbon-carbon bond, said additive being selected from the acyclic active methylene compounds represented by the following formulae: 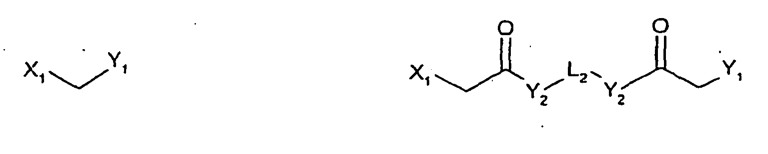 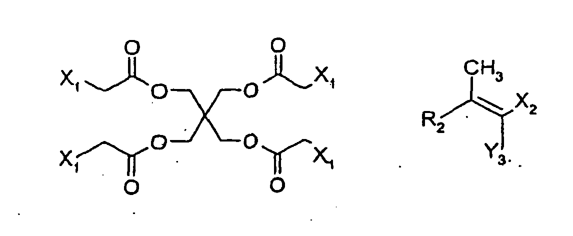
wherein X₁ and Y₁ each denote an electron withdrawing group and are independently selected from aryl, carbamoyl, cyano, heteroaryl, nitro, sulfamoyl, R₁-CO-, R₁O-CO-, R₁NHCO-, (R₁)₂N-CO-, HO-L₂-NHCO-, (HO-L₂)₂N-CO-, R₁-O₂S-, R₁-NHO₂S-, and (R₁)₂NO2S-, wherein R₁ is selected from C₁-C₂₂-alkyl, substituted C₁-C₂₂-alkyl, C₃-C₈-cycloalkyl, substituted C₃-C₈-cycloalkyl, C₃-C₈-alkenyl, C₃-C₈-alkynyl, aryl, heteroaryl; wherein L₂ is a divalent linking group selected from C₁-C₂₂-alkylene, C₃-C₈-cycloalkylene, C₁-C₆-alkylene-cyclohexylene-C₁-C₆-alkylene, C₂-C₄-alkylene-O-arylene-O-C₂-C₄-alkylene, arylene and -(CH₂CH₂-L₃)₁₋₃-CH₂CH₂-, wherein L₃ is selected from - O-, -S-, -SO₂-, and -N(R₁)-;
wherein Y₂ is selected from -O-, -NH- and -N(R₁)-;
wherein X₂ and Y₃ are independently selected from cyano, C₁-C₆-alkylsulfonyl, arylsulfonyl and C₁-C₆-alkoxycarbonyl;
wherein R₂ is selected from aryl and heteroaryl, and
one compound (C) known to catalyze the reaction between an acidic methylene and an aldehyde selected from the group consisting of hindered amine light stabilizers (HALS), amino acids, alkali metal salts of mono- and poly-carboxylic acids, tertiary amines, and secondary amines.

In another embodiment, the polyester composition comprises (a) a polyester and (b) at least one additive that is capable of reacting with acetaldehyde to form a new carbon-carbon bond, said additive being selected from the cyclic active methylene compounds represented by the following formulae: 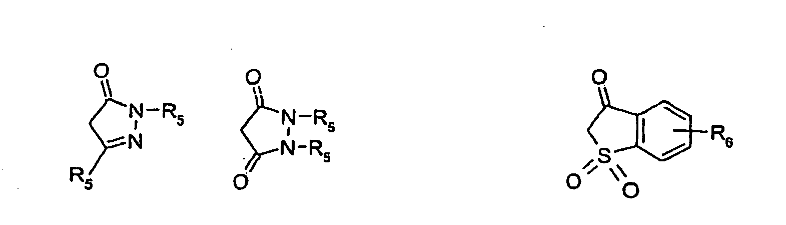 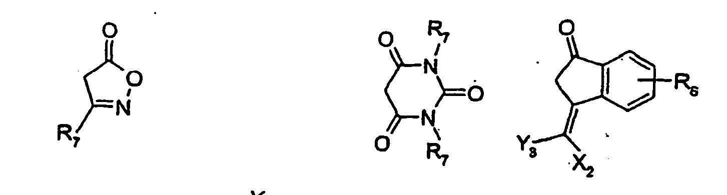 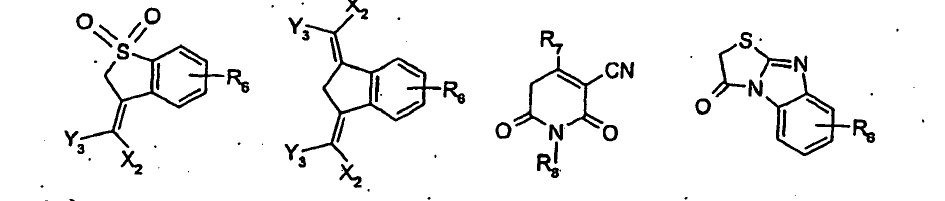 wherein R₅ is selected from hydrogen, C₁-C₆-alkyl, substituted C₁-C₆-alkyl, C₃-C₈-cycloalkyl and aryl;
wherein X₂ and Y₃ are independently selected from cyano, C₁-C₆-alkylsulfonyl, arylsulfonyl and C₁-C₆-alkoxycarbonyl;
wherein R₆ is selected from hydrogen, C₁-C₆-alkyl, C₁-C₆-alkoxy, halogen, cyano, C₁-C₆-alkoxycarbonyl, trifluoromethyl, hydroxy, C₁-C₆-alkanoyloxy, aroyl, C₁-C₆-alkylthio, C₁-C₆-alkylsulfonyl, carbamoyl, sulfamoyl, -NHCOR₉, -NHSO₂R₉, -CONHR₉, -CON(R₉)₂, -SO₂NHR₉ and -SO₂N(R₉)₂ wherein R₉ is selected from C₁-C₆-alkyl, substituted C₁-C₆-alkyl, C₃-C₈-cycloalkyl and aryl;
wherein R₇ is selected from hydrogen, C₁-C₆-alkyl, and aryl;
wherein R₈ is selected from hydrogen, C₁-C₆-alkyl, substituted C₁-C₆-alkyl, C₃-C₈-cycloalkyl, C₃-C₈-alkenyl, C₃-C₈-alkynyl and aryl.

In another embodiment, there is provided a method of reducing the acetaldehyde in a polyester composition that comprises the step of melt blending a polyester composition with the active methylene compounds as set forth herein.

In one embodiment, the polyester is a polymer prepared by the reaction of at least one alkanediol with at least one dicarboxylic acid or dialkyl ester thereof in the presence of a metallic catalyst.

In another embodiment, the composition further comprises at least one compound that is known to catalyze the reaction between an acidic methylene and an aldehyde.

In another embodiment, the composition further comprises 1-99% by weight of an appropriate post-consumer recycled material.

In another embodiment, the composition further comprises 0.01-10 % by weight of at least one colorant or ultraviolet light absorbing compound.

In another embodiment, the composition further comprises an additive to improve the infrared light absorbing properties of the polymer composition.

In another embodiment, the composition further comprises an additive to prevent blown bottles from sticking together.

In one embodiment, the polyester, component (A), of the present invention is a poly(ethylene terephthalate) (PET) resin. Copolyesters of PET can also be used. In another embodiment, the poly(ethylene terephthalate) resin contains repeat units from at least 85 mole percent terephthalic acid and at least 70 mole percent ethylene glycol, based on 100 mole percent dicarboxylic acid and 100 mole percent diol.

The dicarboxylic acid component of the polyester may optionally be modified with up to 30 mole percent of one or more different dicarboxylic acids other than terephthalic acid or suitable synthetic equivalents such as dimethyl terephthalate. Such additional dicarboxylic acids include aromatic dicarboxylic acids preferably having 8 to 14 carbon atoms, aliphatic dicarboxylic acids preferably having 4 to 12 carbon atoms, or cycloaliphatic dicarboxylic acids preferably having 8 to 12 carbon atoms. Examples of dicarboxylic acids to be included with terephthalic acid are: phthalic acid, isophthalic acid, naphthalene-2,6-dicarboxylic acid, cyclohexanedicarboxylic acid, cyclohexanediacetic acid, diphenyl-4,4'-dicarboxylic acid, succinic acid, glutaric acid, adipic acid, azelaic acid, sebacic acid, and the like. Polyesters may be prepared from two or more of the above dicarboxylic acids.

It should be understood that use of the corresponding acid anhydrides, esters, and acid chlorides of these acids is included in the term "dicarboxylic acid".

In addition, the polyester, component (A), may optionally be modified with up to 30 mole percent, of one or more different diols other than ethylene glycol. Such additional diols include cycloaliphatic diols preferably having 6 to 20 carbon atoms or aliphatic diols preferably having 3 to 20 carbon atoms. Examples of such diols to be included with ethylene glycol are: diethylene glycol, triethylene glycol, 1,4-cyclohexanedimethanol, 2,6-decahydronaphthalenedimethanol; propane-1,3-diol, butane-1,4-diol, pentane-1,5-diol, hexane-1,6-diol, 3-methylpentanediol-(2,4), 2-methylpentanediol-(1,4), 2,2,4-trimethylpentane-diol-(1,3), 2-ethylhexanediol-(1,3), 2,2-diethylpropane-diol-(1,3), hexanediol-(1,3), 1,4-di-(hydroxyethoxyrbenzene, 2,2-bis-(4-hydroxycyclohexyl)-propane, 2,4-dihydroxy-1,1,3,3-tetramethyl-cyclobutane, 2,2-bis-(3-hydroxyethoxyphenyl)-propane, and 2,2-bis-(4-hydroxypropoxyphenyl)-propane. Polyesters may be prepared from two or more of the above diols.

The poly(ethylene terephthalate) resin may also contain small amounts of trifunctional or tetrafunctional comonomers such as trimellitic anhydride, trimethylolpropane, pyromellitic dianhydride, pentaerythritol, and other polyester forming polyacids or polyols generally known in the art.

Polyesters comprising substantially only dimethyl terephthalate and ethylene glycol are preferred in the case where the blends of the present invention are used in making thermoformed crystallized PET articles.

Poly(ethylene terephthalate)-based polyesters of the present invention can be prepared by conventional polycondensation procedures well-known in the art. Such processes include direct condensation of the dicarboxylic acid(s) with the diol(s) or by ester interchange using a dialkyl dicarboxylate. For example, a dialkyl terephthalate such as dimethyl terephthalate is ester interchanged with the diol(s) at elevated temperatures in the presence of a catalyst. The polyesters may also be subjected to known solid state polymerization methods.

Typical catalyst or catalyst systems for polyester condensation are well-known in the art. For example, catalysts disclosed in U.S. Patent Nos. 4,025,492; 4,136,089; 4,176,224; 4,238,593; and 4,208,527, incorporated herein by reference, are deemed suitable in this regard. Further, R. E. Wilfong, Journal of Polymer Science, 54 385 (1961) sets forth typical catalysts which are useful in polyester condensation reactions.

A preferred temperature range for a polyester condensation is about 260 °C to about 300 °C.

The terms "C₁-C₂₂-alkyl" and "C₁-C₆-alkyl", denote saturated hydrocarbon radicals or moieties that contains one to twenty-two carbons and one to six carbons, respectively, and which may be straight or branched-chain. Such C₁-C₂₂ alkyl and C₁-C₆-alkyl, groups can be selected from methyl, ethyl, propyl, butyl, pentyl, hexyl, heptyl, octyl, isopropyl, isobutyl, tertbutyl, neopentyl, 2-ethylheptyl, 2-ethylhexyl, and the like.

The terms "substituted C₁-C₂₂-alkyl" and " substituted C₁-C₆-alkyl" refer to C₁-C₂₂-alkyl radicals and C₁-C₆-alkyl radicals as described above that may be substituted with one or more substituents selected from hydroxy, halogen, cyano, aryl, heteroaryl, C₃-C₈-cycloalkyl, substituted C₃-C₈-cycloalkyl, C₁-C₆-alkoxy, C₁-C₆-alkanoyloxy, C₁-C₆-alkoxycarbonyl, C₁-C₆-alkylthio, C₁-C₆-alkylsulfonyl and the like.

The term "C₃-C₈-cycloalkyl" is used to denote a cycloaliphatic hydrocarbon radical containing three to eight carbon atoms.

The term "substituted C₃-C₈-cycloalkyl" is used to describe a C₃-C₈-cycloalkyl radical as detailed above containing at least one group selected from C₁-C₆-alkyl, C₁-C₆-alkoxy, hydroxy, halogen, and the like.

The term "aryl" is used to denote an aromatic ring system containing 6,10 or 14 carbon atoms in the conjugated aromatic ring structure and these ring systems substituted with one or more groups selected from C₁-C₆-alkyl; C₁-C₆-alkoxycarbonyl; C₁-C₆-alkoxy; phenyl, and phenyl substituted with C₁-C₆-alkyl, C₁-C₆-alkoxy, halogen and the like; C₃-C₈-cycloalkyl; halogen; hydroxy; cyano; trifluoromethyl and the like. Typical aryl groups include phenyl, naphthyl, phenylnaphthyl, anthryl (anthracenyl) and the like.

The term "heteroaryl" is used to describe conjugated cyclic radicals containing at least one heteroatom selected from sulfur, oxygen, nitrogen or a combination of these in combination with from two to about ten carbon atoms and these heteroaryl radicals substituted with the groups mentioned above as possible substituents on the aryl ring. Typical heteroaryl ring systems include: furyl, thienyl, pyrrolyl, imidazolyl, pyrazolyl, thiazolyl, isothiazolyl, oxazolyl, isoxazolyl, triazolyl, thiadiazolyl, oxadiazolyl, tetrazolyl, thiatriazolyl, oxatriazolyl, pyridyl, pyrimidyl, pyrazinyl, pyridazinyl, thiazinyl, oxazinyl, triazinyl, thiadiazinyl, oxadiazinyl, dithiazinyl, dioxazinyl, oxathiazinyl, tetrazinyl, thiatriazinyl, oxatriazinyl, dithiadiazinyl, imidazolinyl, dihydropyrimidyl, tetrahydropyrimidyl, tetrazolo-[1,5-b]pyridazinyl and purinyl, benzoxazolyl, benzothiazolyl, benzimidazolyl, indolyl, and the like.

The term "halogen" is used to represent fluorine, chlorine, bromine, and iodine; however, chlorine and bromine are preferred.

The term "C₂-C₂₂-alkylene" is used to denote a divalent hydrocarbon group that contains from two to twenty-two carbons and which may be straight or branched chain and which may be substituted with one or more substituents selected from hydroxy, halogen, C₁-C₆-alkoxy, C₁-C₆-alkanoyloxy and aryl.

The term "C₃-C₈-cycloalkylene." is used to denote divalent cycloaliphatic groups containing three to eight carbon atoms and these are optionally substituted with one or more C₁-C₆-alkyl groups.

The term "arylene" is used to denote 1,2-, 1,3-, and 1,4-phenylene or naphthalene-diyl groups and such groups optionally substituted with C₁-C₆-alkyl, C₁-C₆-alkoxy and halogen.

The terms "C₁-C₆-alkoxy", " C₁-C₆-alkylthio", "C₁-C₆-alkylsulfonyl", "C₁-C₆-alkanoyloxy", " C₁-C₆-alkoxycarbonyl" are used to denote the following radicals, respectively: -OR₁₁, -S-R₁₁, -O₂S-R₁₁, -OCO-R₁₁ and -CO₂R₁₁, wherein R₁₁ represents C₁-C₆-alkyl and substituted C₁-C₆-alkyl.

The term "aroyl" is used to represent -OC-aryl, wherein aryl is as previously defined.

The terms"C₃-C₈-alkenyl" and "C₃-C₈-alkynyl" are used to denote branched or straight chain hydrocarbon radicals containing at least one double bond and one triple bond, respectively.

The term "appropriate post-consumer recycled material" denotes any compatible polymer composition that has been recovered through a recycle stream. Poly(ethylene terephthalate) is the preferred post consumer recycle material. Such materials may be obtained, for example, via known methodologies for methanolysis or glycolysis of polyesters. (See, for example, U.S. Patent. Nos. 6,545,061; 3,776,945; 3,321,510; 3,037,050; 4,578,502; 4,163,860; 3,701,741; 3,488,298; 5,051,528; and EP 484963 A2).

The term "colorant" is defined by any copolymerized or noncoploymeriazble (C.I. Solvent dyes) colorant that is useful for imparting color or masking yellow to polyethylene terephthalate compositions such as cobalt and those disclosed in U.S. Patent Nos. 4,267,306; 4,359,570; 4,403,092; 4,617,373; 4,740,581; 4,745,173; 4,808,677; 4,892,922; 4,999,418; 5,030,708; 5,086,16; 5,102,980; 5,194,571; 5,274,072; 5,281,659. The term "ultraviolet light absorbing compound" is defined as one compound or a mixture of compounds that absorbs light in the range of 300-400 nm with a minimal absorbance between 400 and 700 nm. Preferred examples are triazines, cyanoacrylates, benzotriazoles, naphthalenes, benzophenones, benzoxazin-4-ones. More preferred are cyanoacrylate and commercially available UV-absorbers such as: CYASORB UV-9 (Cytec Industries). CYASORB UV-24 (Cytec Industries), CYASORB UV-531 (Cytec Industries), CYASORB UV-2337 (Cytec Industries), CYASORB UV-5411 (Cytec Industries), CYASORB UV-5365 (Cytec Industries), CYASORB UV-1164 (Cytec Industries), CYASORB UV-3638 (Cytec Industries), TINUVIN P (Ciba Specialty Chemicals), TINUVIN 213 (Ciba Specialty Chemicals), TINUVIN 234 (Ciba Specialty Chemicals), TINUVIN 320 (Ciba Specialty Chemicals), TINUVIN 326 (Ciba Specialty Chemicals), TINUVIN 327 (Ciba Specialty Chemicals), TINUVIN (Ciba Specialty Chemicals), TINUVIN 329 (Ciba Specialty Chemicals), TINUVIN 350 (Ciba Specialty Chemicals), TINUVIN 360 (Ciba Specialty Chemicals), TINUVIN 571 (Ciba Specialty Chemicals) and TINUVIN 1577 (Ciba Specialty Chemicals). Most preferred are cyanoacrylates.

The term "improve the infrared light absorbing properties" is defined by any material that can absorb light in the infrared light region of the electromagnetic spectrum, particularly small (<50 microns) black particles that are insoluble in PET. Appropriate materials include carbon black, black iron oxide, reduced metal catalysts residues, organic infrared (IR)-absorbing compounds such as metal phthalocyanines, metal naphthalocyanines, squaraines, and the like. Examples of useful infrared light absorbing materials include carbon black (U.S. Pat. No. 4,408,004) and reduced antimony metal (U.S. Pat. No. 5,419,936 and U.S. Pat. No. 5,529,744, incorporated herein by reference). Additionally, U.S. Pat. No. 4,420,581 and U.S. Pat. No. 4,250,078, incorporated herein by reference, disclose using red iron oxide as an infrared absorber in polyester containing green dye. Examples of suitable organic infrared (IR)-absorbing compounds are disclosed in U.S. Pat. Nos. 5,973,038 and 6,197,851.

The term "additive to prevent blown bottles from sticking together" is defined as an additive or coating that can be used to reduce the tendency of blown PET bottles to stick together. Suitable materials are lubricants, inorganic mineral composites, talc and the like. See for example, U.S. Pat. Nos. 6,500,890; 5,976,450; and U.S. Application 10/105,488, incorporated herein by reference.

The term "compound that is known to catalyze the reaction between an acidic methylene and an aldehyde" includes basic organic compopunds such as hindered amine light stabilizers (HALS), amino acids, alkali metal salts of mono- and poly-carboxylic acids, tertiary amines, secondary amines and the like. Preferred examples are HALS and alkali metal salts of C₁-C₆-mono- and dicarboxylic acids. Even more preferred is sodium acetate.

Additionally, the polyester composition may contain other additives or modifiers typically found in PET, such as inorganic or organic toners. In this regard, see e.g., U.S. Patent Nos. 5,340,910; 5,372,864; and 5, 384, 377.

Although not necessarily preferred, the polymers of the present invention may also include additives normally used in polymers. Illustrative of such additives known in the art are glass fibers, fillers, impact modifiers, antioxidants, stabilizers, flame retardants, crystallization aids, recycling release aids, oxygen scavengers, plasticizers, nucleators, mold release agents, compatibilizers, and the like, or their combinations,

### EXAMPLES

Experimental Conditions: All PET compositions were made by extruding a blend of Eastapak^{®} PET Polyester 9921 (Eastman Chemical Company), the active methylene and catalyst (if present) using an 18 mm twin screw extruder (APV Chemical Machinery Inc., Saginaw, MI 48601) equipped with a medium mixing screw. All zone temperatures were set to 285 °C and the screw speed was set to 200 rpm. An Accu-Rate (ACCU-RATE Inc. Whitewater, WI) dry materiel feeder was used to feed the polymer and additives into the extruder at a set addition rate of 3.0. The extruded rods were cooled by passing through a 4.5 long ice-water bath then chopped using a Berlyn pelletizer (The Berlyn Corp., Worcester, MA) set at a speed of 5-8. The pellets were captured in a plastic bag and stored on dry ice in a large Igloo Cooler until analyzed for acetaldehyde. The Eastapak^{®} PET Polyester 9921 was dried for approximately 24 h in a vacuum oven (Model 5851, National Appliance Company, Portland, OR) at 150 °C at 20 mm of Hg with a slight ingress of dry nitrogen. The first 5 min of extrudate was not collected in order to ensure the extruder had been adequately purged. When multiple concentrations of the same mixture of additives were extruded, the lower concentrations of additives were always extruded first until the experiment was completed. The extruder was purged with at least 300 g of PET 9921 before the next additive was evaluated.
Acetaldehyde measurement (French National Test Conditions). A sample of the polyethylene terephthalate was ground to a fine powder.
Approximately 0.2 g (+/- 0:02 g) of the ground polymer was placed into a 20 mL head space vial (Agilent Part Number 5182-0837). A septum was placed on the vial (Agilent, Part Number 9301-0807). An aluminum cap (Agilent, Part Number 9301-0721) was crimped over the septum to seal the vial. The sample vial was placed in the appropriate position of a head-space sampler (Agilent 7694). The head-space sampler was programmed to heat the sample for 60 min at 150 °C then injected the head-space gas into an Agilent 6890'Series GC. The concentration of acetaldehyde in the headspace was calculated using a calibration curve that was generated using a 1000 ppm acetaldehyde standard (1000 ppm in water, Part Number 868095, Supelco, Belifonte, PA 16823-0048). The Agilent 7694 head-space sampler was set to the following conditions: Oven Temperature = 150 °C, Loop Temperature = 160 °C, Transfer Line Temperature = 170 °C, Carrier Pressure =11.5 psi, Vial Pressure = 10.5 psi, Vial Equilibration Time = 60 min, Pressurize Time = 0.2 min, Loop Fill Time = 0.2 min, Loop equilibration time = 0.1 min, Injection Time = 0.2 min, GC Cycle Time = 9 min. 10.5 psi, Vial Equilibration Time = 60 min, Pressurize Time = 0.2 min, Loop Fill Time = 0.2 min, Loop equilibration time = 0.1 min, Injection Time = 0.2 min, GC Cycle Time = 9 min.

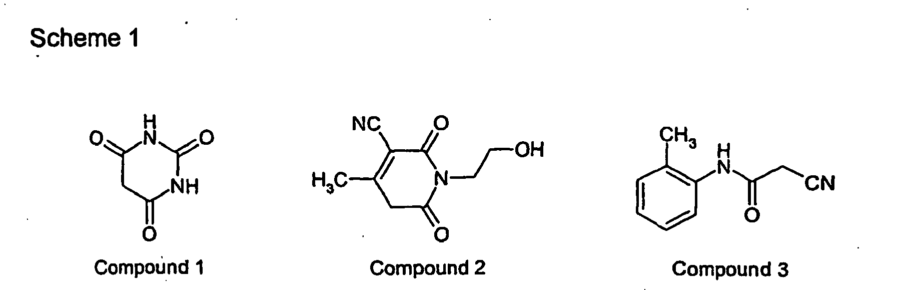

The three active methylene compounds shown in Scheme 1 were bag blended with Eastapak® PET Polyester 9921 according to the recipe in Table I. The samples were extruded using a twin-screw extruder then stored over dry ice until analyzed. The samples were analyzed for acetaldehyde concentration according to French National test conditions. The results are shown in Table 1. It is clear that Compound 3 (Scheme 1) was the most effective at reducing the acetaldehyde level in PET 9921. At 900 ppm, Compound 3 reduced the level of acetaldehyde by approximately 47%. At 600 ppm, compound 3 reduced the acetaldehyde level in PET 9921 by approximately 42%. Similar results were obtained using Compound 2. Compound 1 was the least effective; however, compound 1 reduced the acetaldehyde level in PET 9921 by 30% at a loading of 900 ppm.

**Table I**

| Example | Eastapak^{®} PET Polyester 9921 | Compound 1 | Compound 2 | Compound 3 | PPM of Acetaldehyde* |
|---|---|---|---|---|---|
| 1 | 300 g | | | | 18.2 |
| 2 | 300 g | 90 mg | | | 16.0 |
| 3 | 300 g | 180 mg | | | 15.2 |
| 4 | 300 g | 270 mg | | | 12.7 |
| 5 | 300 g | | 90 mg | | 14.3 |
| 6 | 300 g | | 180 mg | | 13.1 |
| 7 | 300 g | | 270 mg | | 12.0 |
| 8 | 300 g | | | 90 mg | 13.0 |
| 9 | 300 g | | | 180 mg | 10.6 |
| 10 | 300 g | | | 270 mg | 9.7 |

| | | | | | |
|---|---|---|---|---|---|
| *normalized to a sample size of 0.215 g | | | | | |

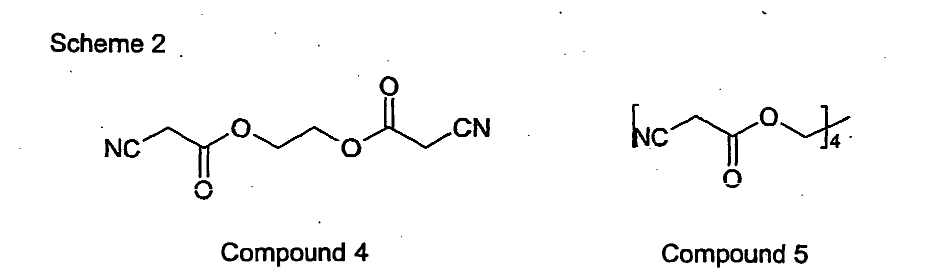

The two active methylene compounds shown in Scheme 2 were bag blended with Eastapak^{®} PET Polyester 9921 according to the recipe in Table II. The samples were extruded using a twin-screw extruder then stored over dry ice until analyzed. The samples were analyzed for acetaldehyde concentration according to French National test conditions. The results are shown in Table II.

It is clear that Compound 4 (Scheme 2) was only modestly effective at reducing the acetaldehyde level in Eastapak^{®} PET Polyester 9921 (Examples 12-15 vs. Example 11). Examples 16-99 clearly demonstrate improvements that are obtained when a hindered amine light stabilizer (Chimassorb^{®} 119, Ciba Specialty Chemicals) is used in combination with Compund 4. Chimassorb 119 is a polymeric HALS that comprises tetramethylpiperidine moeties that are believed to catalyze the reaction between the active methylene and an aldehyde, such as acetaldehyde (Knoevenagal condensation). Substituted piperidines and their acid addition salts are known to be good catalyst for the Knoevenagal condensation. For a more detailed discussion of the Knoevenagal condensation see Named Organic Reactions; Laue, T. and Plagens, A.; John Wiley & Sons © 1998.

The data in Table II demonstates that Compound 5 (Scheme 2) was only modestly effective at reducing the acetaldehyde level in Eastapak® PET Polyester 9921 (Examples 20-23 vs. Example 11). Examples 24-27 clearly demonstrates the improvement that is obtained when sodium acetate is used in combination with Compund 5. Sodium acetate is known to catalyze the reaction between the active methylene and an aldehyde, such as acetaldehyde (Knoevenagal condensation).

**Table II**

| Example | Eastapak® PET Polyester 9921 | Compound 4 | Compound 5 | Chimassorb 119 | Sodium Acetate | PPM of Acetaldehyde* |
|---|---|---|---|---|---|---|
| 11 | 250 g | | | | | 19.1 |
| 12 | 250 g | 25 mg | | | | 15.0 |
| 13 | 250 g | 62.5 mg | | | | 20.5 |
| 14 | 250 g | 125 mg | | | | 17.4 |
| 15 | 250 g | 250 mg | | | | 15.7 |
| 16 | 250 g | 25 mg | | 25 mg | | 10.1 |
| 17 | 250 g | 62.5 mg | | 62.5 mg | | 9.8 |
| 18 | 250 g | 125 mg | | 125 mg | | 8.7 |
| 19 | 250 g | 250 mg | | 250 mg | | 6.2 |
| 20 | 250 g | | 25 mg | | | 17.2 |
| 21 | 250 g | | 62.5 mg | | | 19.0 |
| 22 | 250 g | | 125 mg | | | 21.0 |
| 23 | 250 g | | 250 mg | | | 21.6 |
| 24 | 250 g | | 25 mg | | 25 mg | 14.5 |
| 25 | 250 g | | 62.5 mg | | 62.5 mg | 13.3 |
| 26 | 250 g | | 125 mg | | 125 mg | 12.2 |
| 27 | 250 g | | 250 mg | | 250 mg | 12.1 |

| | | | | | | |
|---|---|---|---|---|---|---|
| *normalized to a sample size of 0.215 g | | | | | | |

## Claims

1. A polyester composition comprising:
(a) a polyester;
(b) at least one additive that is capable of reacting with acetaldehyde to form a new carbon-carbon bond, said additive being selected from the acyclic active methylene compounds represented by the following formulae: 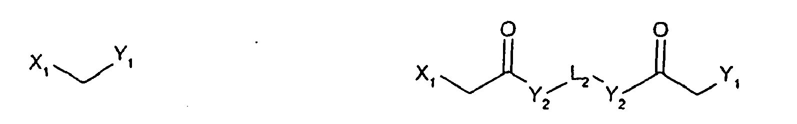 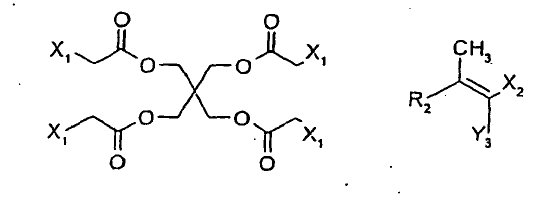
wherein X₁ and Y₁ each denote an electron withdrawing group and are independently selected from aryl, carbamoyl, cyano, heteroaryl, nitro, sulfamoyl, R₁-CO-, R₁O-CO-, R₁NHCO-, (R₁)₂N-CO-, HO-L₂-NHCO-, (HO-L₂)₂N-CO-, R₁-O₂S-, R₁-NHO₂S-, and (R₁)₂NO₂S-, wherein R₁ is selected from C₁-C₂₂-alkyl, substituted C₁-C₂₂-alkyl, C₃-C₈-cycloalkyl, substituted C₃-C₈-cycloalkyl, C₃-C₈-alkenyl, C₃-C₈-alkynyl, aryl, heteroaryl; wherein L₂ is a divalent linking group selected from C₁-C₂₂-alkylene, C₃-C₈-cycloalkylene, C₁-C₆-alkylenecyclohexylene-C₁-C₆-alkylene, C₂-C₄-alkylene-O-arylene-O-C₂-C₄-alkylene, arylene and -(CH₂CH₂-L₃)₁₋₃-CH₂CH₂-, wherein L₃ is selected from -0-, -S-, -SO₂-, and -N(R₁)-;
wherein Y₂ is selected from -O-, -NH-, and -N(R₁)-;
wherein X₂ and Y₃ are independently selected from cyano, C₁-C₆-alkylsulfonyl, arylsulfonyl and C₁-C₆-alkoxycarbonyl;
wherein R₂ is selected from aryl and heteroaryl; and
(c) one compound known to catalyze the reaction between an acidic methylene and an aldehyde selected from the group consisting of hindered amine light stabilizers (HALS), amino acids, alkali metal salts of mono- and poly-carboxylic acids, tertiary amines, and secondary amines.

2. A polyester composition comprising:
(a) a polyester; and
(b) at least one additive that is capable of reacting with acetaldehyde to form a new carbon-carbon bond, said additive selected from the cyclic active methylene compounds represented by the following formulae: 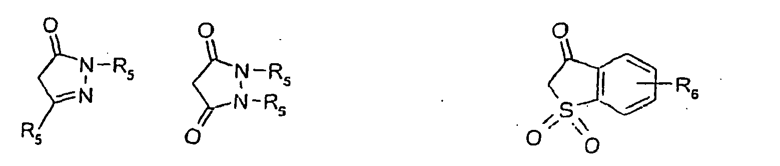 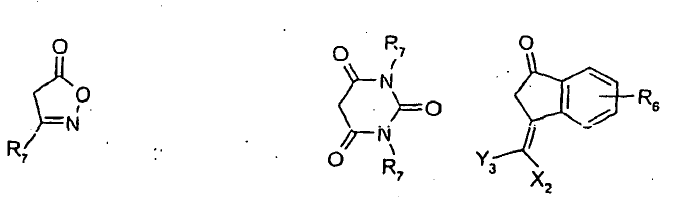 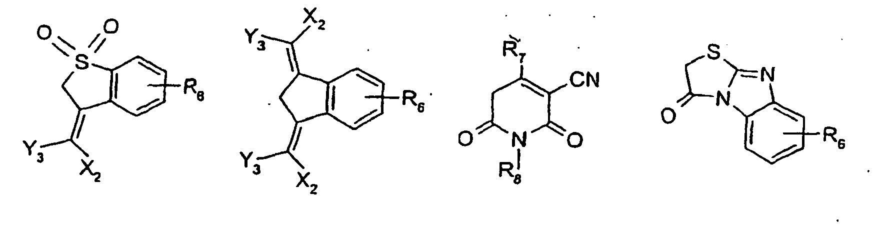
wherein R₅ is selected from hydrogen, C₁-C₆-alkyl, substituted C₁-C₆-alkyl, C₃-C₈-cycloalkyl and aryl;
wherein R₆ is selected from hydrogen, C₁-C₆-alkyl, C₁-C₆-alkoxy, halogen, cyano, C₁-C₆-alkoxycarbonyl, trifluoromethyl, hydroxy, C₁-C₆-alkanoyloxy, aroyl, C₁-C₆-alkylthio, C₁-C₆-alkylsulfonyl, carbamoyl, sulfamoyl, -NHCOR₉, -NHSO₂R₉, -CONHR₉, CON(R₉)₂, -SO₂NHR₉ and SON₂(R₉)₂; wherein R₉ is selected from C₁-C₆-alkyl, substituted C₁-C₆-alkyl, C₃-C₈-cycloalkyl and aryl;
wherein R₇ is selected from hydrogen, C₁-C₆-alkyl and aryl,
wherein X₂ and Y₃ are independently selected from cyano, C₁-C₆-alkylsulfonyl, arylsulfonyl, and C₁-C₆-alkoxycarbonyl;
wherein R₈ is selected from hydrogen, C₁-C₆-alkyl, substituted C₁-C₆-alkyl, C₃-C₈-cycloalkyl, C₃-C₈-alkenyl, C₃-C₈-alkynyl and aryl.

3. The composition of claim 1 or 2, further comprising 1-99 weight percent of a post-consumer recycled material.

4. The composition of claim 1 or 2, further comprising 0.01 to 10 weight percent of at least one colorant and/or ultraviolet light absorbing compound in the polyester.

5. The composition of claim 1 or 2, further comprising an infrared absorbing compound selected from carbon black, black iron oxide, reduced antimony metal catalyst residues, and infrared absorbing compounds in the polyester.

6. The composition of claim 1 or 2, further comprising a non-sticking additive selected from lubricants, inorganic mineral composites, and talc.

7. The composition of claim 2 wherein the additive is a compound of the formula: 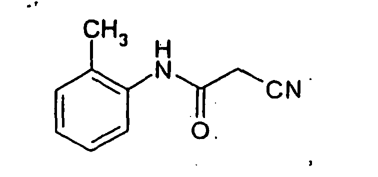 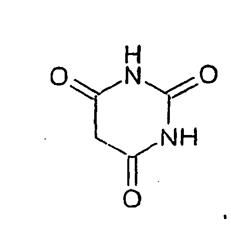 Or

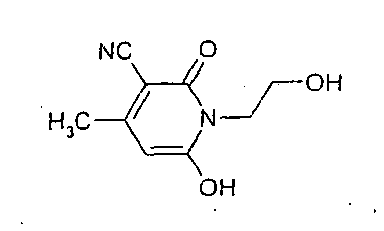

8. A shaped or formed article comprised of the composition of claim 1 or 2.

9. A method for reducing the amount of acetaldehyde in a polyester composition, which comprises melt-blending into the polyester composition at least one additive that is capable of reacting with acetaldehyde to form a new carbon-carbon bond, said additive being selected from the acyclic active methylene compounds represented by the following formulae: 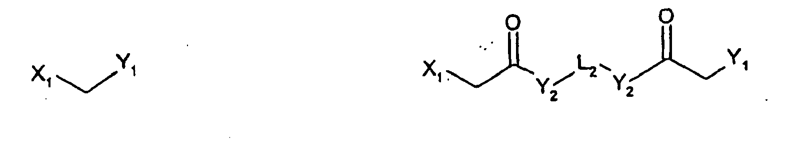 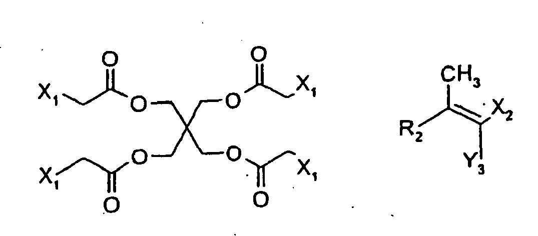
wherein X₁ and Y₁ each denote an electron withdrawing group and are independently selected from aryl, carbomoyl, cyano, heteroaryl, nitro, sulfamoyl, R₁-CO-, R₁O-CO-, R₁NHCO-, (R₁)₂N-CO-, HO-L₂-NHCO-, (HO-L₂)₂N-CO-, R₁-O₂S-, R₁-NHO₂S-, and (R₁)₂NO₂S-, wherein R₁ is selected from C₁-C₂₂-alkyl, substituted C₁-C₂₂-alkyl, C₃-C₈-cycloalkyl, substituted C₃-C₈-cycloalkyl, C₃-C₈alkenyl, C₃-C₈-alkynyl, aryl, heteroaryl; wherein L₂ is a divalent linking group selected from C₁-C₂₂-alkylene, C₃-C₈-cycloalkylene, C₁-C₆-alkylene-cyclohexylene-C₁-C₆-alkylene, C₂-C₄-alkylene-O-arylene-O-C₂-C₄-alkylene, arylene and - (CH₂CH₂-L₃)₁₋₃-CH₂CH₂-, wherein L₃ is selected from -O-, -S-, -SO₂-, and -N(R₁)-;
wherein Y₂ is selected from -O-, -NH-, and -N(R₁)-;
wherein X₂ and Y₃ are independently selected from cyano, C₁-C₆-alkylsulfonyl, arylsulfonyl and C₁-C₆-alkoxycarbonyl;
wherein R₂ is selected from aryl and heteroaryl; and
(c) one compound known to catalyze the reaction between an acidic methylene and an aldehyde selected from the group consisting of hindered amine light stabilizers (HALS), amino acids, alkali metal salts of mono- and poly-carboxylic acids, tertiary amines, and secondary amines.

10. A method for reducing the amount of acetaldehyde in a polyester composition, which comprises melt-blending into the polyester composition at least one additive that is capable of reacting with acetaldehyde to form a new carbon-carbon bond, said additive selected from the cyclic active methylene compounds represented by the following formulae: 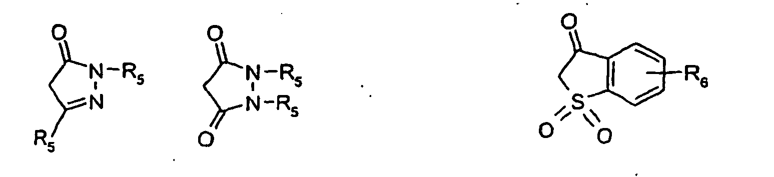 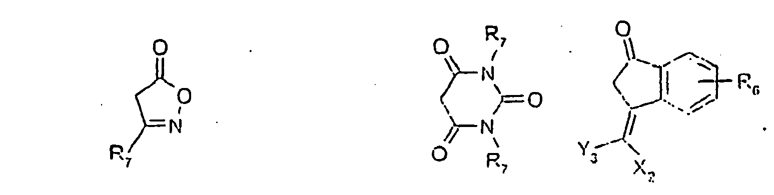 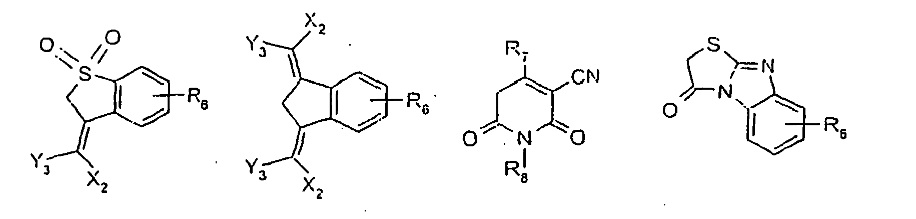
wherein R₅ is selected from hydrogen, C₁-C₆-alkyl, substituted C₁-C₆-alkyl, C₃-C₈-cycloalkyl and aryl;
wherein R₆ is selected from hydrogen, C₁-C₆-alkyl, C₁-C₆-alkoxy, halogen, cyano, C₁-C₆-alkoxycarbonyl, trifluoromethyl, hydroxy, C₁-C₆-alkanoyloxy, aroyl, C₁-C₆-alkylthio, C₁-C₆-alkylsulfonyl, carbamoyl, sulfamoyl, -NHCOR₉, -NHSO₂R₉, -CONHR₉, -CON(R₉)₂, -SO₂NHR₉ and -SON₂(R₉)₂; wherein R₉ is selected from C₁-C₆-alkyl, substituted C₁-C₆-alkyl, C₃-C₈-cycloalkyl and aryl;
wherein R₇ is selected from hydrogen, C₁-C₆-alkyl and aryl;
wherein X₂ and Y₃ are independently selected from cyano, C₁-C₆-alkylsulfonyl, arylsulfonyl, and C₁-C₆-alkoxycarbonyl;
wherein R₈ is selected from hydrogen C₁-C₆-alkyl, substituted C₁-C₆-alkyl, C₃-C₈-cycloalkyl, C₃-C₈-alkenyl, C₃-C₈-alkynyl and aryl.

11. The method of claim 10 wherein the additive is a compound of the formula: 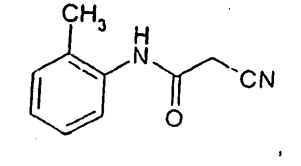 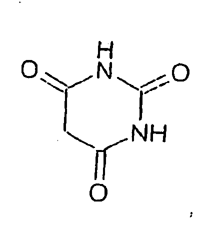 or

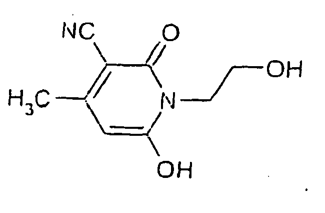

## Patentansprüche

1. Polyesterzusammensetzung, umfassend:
(a) einen Polyester;
(b) mindestens ein Additiv, das mit Acetaldehyd unter Bildung einer neuen Kohlenstoff-Kohlenstoff-Bindung reagieren kann, wobei das Additiv ausgewählt ist aus den acyclischen aktiven Methylen-Verbindungen, die durch die folgenden Formeln dargestellt werden: 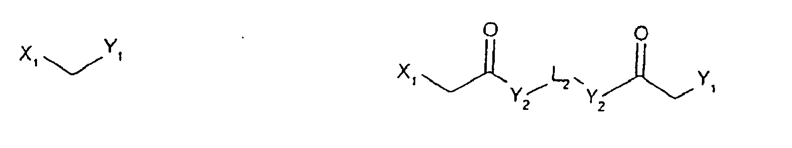 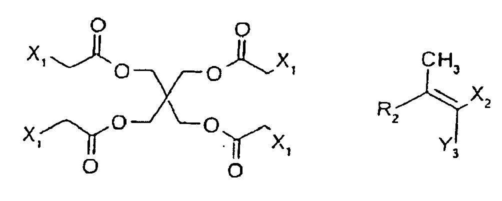
worin X₁ und Y₁ jeweils eine Elektronen-abziehende Gruppe bezeichnen und unabhängig ausgewählt sind aus Aryl, Carbamoyl, Cyano, Heteroaryl, Nitro, Sulfamoyl, R₁-CO-, R₁O-CO-₁ R₁NHCO-, (R₁)₂N-CO-, HO-L₂-NHCO-, (HO-L₂)₂N-CO-, R₁-O₂S-, R₁-NHO₂S- und (R₁)₂NO₂S-, worin R₁ ausgewählt ist (C₁-C₂₂)-Alkyl, substituiertem (C₁-C₂₂)-Alkyl, (C₃-C₈)-Cycloalkyl, substituiertem (C₃-C₈)-Cycloalkyl, (C₃-C₈)-Alkenyl, (C₃-C₈)-Alkinyl, Aryl, Heteroaryl; worin L₂ eine zweiwertige Verknüpfungsgruppe ist, die ausgewählt ist aus (C₁-C₂₂)-Alkylen, (C₃-C₈)-Cycloalkylen, (C₁-C₆)-Alkylencyclohexylen-(C₁-C₆)-alkylen, (C₂-C₄)-Alkylen-O-arylen-O-(C₂-C₄)-alkylen, Arylen und -(CH₂CH₂-L₃)₁₋₃-CH₂CH₂-, worin L₃ ausgewählt ist aus -O-, -S-, -SO₂- und -N(R₁)-;
worin Y₂ aus -O-, -NH- und -N(R₁)- ausgewählt ist;
worin X₂ und Y₃ unabhängig aus Cyano, (C₁-C₆)-Alkylsulfonyl, Arylsulfonyl und (C₁-C₆)-Alkoxycarbonyl ausgewählt sind;
worin R₂ aus Aryl und Heteroaryl ausgewählt ist; und
(c) eine Verbindung, von der bekannt ist, dass sie die Reaktion zwischen einem sauren Methylen und einem Aldehyd katalysiert und ausgewählt ist aus der Gruppe bestehend aus gehinderten Amin-Lichtstabilisatoren (HALS), Aminosäuren, Alkalimetallsalzen von Mono- und Polycarbonsäuren, tertiären Aminen und sekundären Aminen.

2. Polyesterzusammensetzung, umfassend:
(a) einen Polyester; und
(b) mindestens ein Additiv, das mit Acetaldehyd unter Bildung einer neuen Kohlenstoff-Kohlenstoff-Bindung reagieren kann, wobei das Additiv ausgewählt ist aus den cyclischen aktiven Methylen-Verbindungen, die durch die folgenden Formeln dargestellt werden: 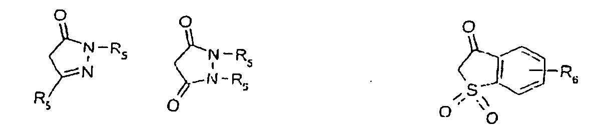 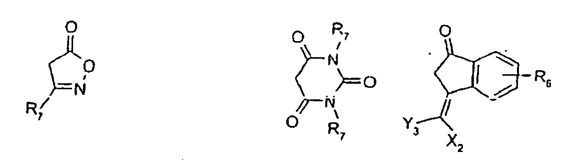 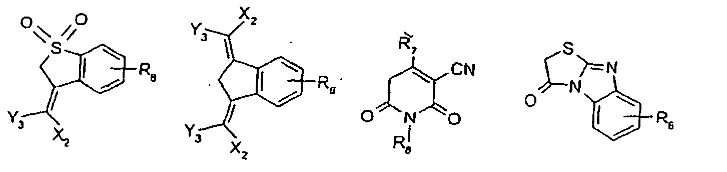
worin R₅ aus Wasserstoff, (C₁-C₆)-Alkyl, substituiertem (C₁-C₆)-Alkyl, (C₃-C₈)-Cycloalkyl und Aryl ausgewählt ist;
worin R₆ ausgewählt ist aus Wasserstoff, (C₁-C₆)-Alkyl, (C₁-C₆)-Alkoxy, Halogen, Cyano, (C₁-C₆)-Alkoxycarbonyl, Trifluormethyl, Hydroxy, (C₁-C₆)-Alkanoyloxy, Aroyl, (C₁-C₆)-Alkylthio, (C₁-C₆)-Alkylsulfonyl, Carbamoyl, Sulfamoyl, -NHCOR₉, -NHSO₂R₉, -CONHR₉, CON(R₉)₂, -SO₂NHR₉ und -SON₂(R₉)₂; worin R₉ aus (C₁-C₆)-Alkyl, substituiertem (C₁-C₆)-Alkyl, (C₃-C₈)-Cycloalkyl und Aryl ausgewählt ist;
worin R₇ aus Wasserstoff, (C₁-C₆)-Alkyl und Aryl ausgewählt ist,
worin X₂ und Y₃ unabhängig aus Cyano, (C₁-C₆)-Alkylsulfony, Arylsulfonyl und (C₁-C₆)-Alkoxycarbonyl ausgewählt sind;
worin R₈ aus Wasserstoff, (C₁-C₆)-Alkyl, substituiertem (C₁-C₆)-Alkyl, (C₃-C₈)-Cycloalkyl, (C₃-C₈)-Alkenyl, (C₃-C₈)-Alkinyl und Aryl ausgewählt ist.

3. Zusammensetzung nach Anspruch 1 oder 2, weiter umfassend 1-99 Gewichtsprozent eines nach Gebrauch recycelten Materials.

4. Zusammensetzung nach Anspruch 1 oder 2, weiter umfassend 0,01 bis 10 Gewichtsprozent mindestens eines Färbemittels und/oder einer Ultraviolettlicht absorbierenden Verbindung in dem Polyester.

5. Zusammensetzung nach Anspruch 1 oder 2, weiter umfassend eine Infrarot absorbierende Verbindung, die aus Ruß, schwarzem Eisenoxid, reduzierten Antimonmetall-Katalysatorresten und Infrarot absorbierenden Verbindungen in dem Polyester ausgewählt ist.

6. Zusammensetzung nach Anspruch 1 oder 2, weiter umfassend ein nichtklebriges Additiv, das aus Schmiermitteln, anorganischen Mineralverbundstoffen und Talkum ausgewählt ist.

7. Zusammensetzung nach Anspruch 2, bei der das Additiv eine Verbindung der Formel: 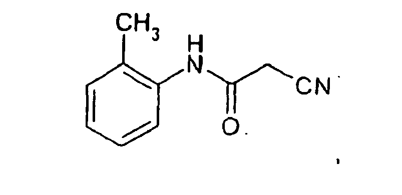 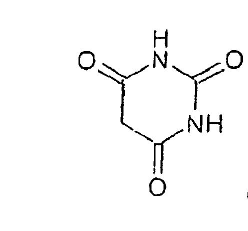 oder 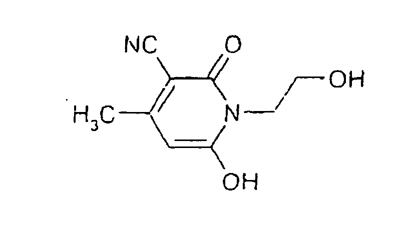 ist.

8. Gestalteter oder geformter Gegenstand, der die Zusammensetzung nach Anspruch 1 oder 2 umfasst.

9. Verfahren zur Verringerung der Menge an Acetaldehyd in einer Polyesterzusammensetzung, welches umfasst, dass man in die Polyesterzusammensetzung mindestens ein Additiv durch Schmelzmischen einbringt, das mit Acetaldehyd unter Bildung einer neuen Kohlenstoff-Kohlenstoff-Bindung reagieren kann, wobei das Additiv ausgewählt ist aus den acyclischen aktiven Methylen-Verbindungen, die durch die folgenden Formeln dargestellt werden: 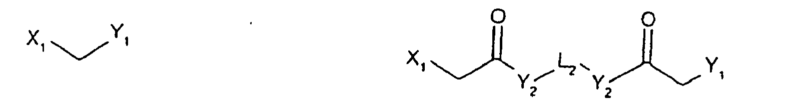 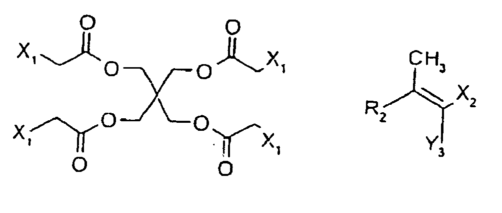
worin X₁ und Y₁ jeweils eine Elektronen-abziehende Gruppe bezeichnen und unabhängig ausgewählt sind aus Aryl, Carbamoyl, Cyano, Heteroaryl, Nitro, Sulfamoyl, R₁-CO-, R₁O-CO-, R₁NHCO-, (R₁)₂N-CO-, HO-L₂-NHCO-, (HO-L₂)₂N-CO-, R₁-O₂S-, R₁-NHO₂S- und (R₁)₂NO₂S-, worin R₁ ausgewählt ist (C₁-C₂₂)-Alkyl, substituiertem (C₁-C₂₂)-Alkyl, (C₃-C₈)-Cycloalkyl, substituiertem (C₃-C₈)-Cycloalkyl, (C₃-C₈)-Alkenyl, (C₃-C₈)-Alkinyl, Aryl, Heteroaryl; worin L₂ eine zweiwertige Verknüpfungsgruppe ist, die ausgewählt ist aus (C₁-C₂₂)-Alkylen, (C₃-C₈)-Cycloalkylen, (C₁-C₆)-Alkylencyclohexylen-(C₁-C₆)-alkylen, (C₂-C₄)-Alkylen-O-arylen-O-(C₂-C₄)-alkylen, Arylen und -(CH₂CH₂-L₃)₁₋₃-CH₂CH₂-, worin L₃ ausgewählt ist aus -O-, -S-, -SO₂- und -N(R₁)-;
worin Y₂ aus -O-, -NH- und -N(R₁)- ausgewählt ist;
worin X₂ und Y₃ unabhängig aus Cyano, (C₁-C₆)-Alkylsulfonyl, Arylsulfonyl und (C₁-C₆)-Alkoxycarbonyl ausgewählt sind;
worin R₂ aus Aryl und Heteroaryl ausgewählt ist; und
(c) eine Verbindung, von der bekannt ist, dass sie die Reaktion zwischen einem sauren Methylen und einem Aldehyd katalysiert und ausgewählt ist aus der Gruppe bestehend aus gehinderten Amin-Lichtstabilisatoren (HALS), Aminosäuren, Alkalimetallsalzen von Mono- und Polycarbonsäuren, tertiären Aminen und sekundären Aminen.

10. Verfahren zur Verringerung der Menge an Acetaldehyd in einer Polyesterzusammensetzung, welches umfasst, dass man in die Polyesterzusammensetzung mindestens ein Additiv durch Schmelzmischen einbringt, das mit Acetaldehyd unter Bildung einer neuen Kohlenstoff-Kohlenstoff-Doppelbindung reagieren kann, wobei das Additiv ausgewählt ist aus den cyclischen aktiven Methylen-Verbindungen, die durch die folgenden Formeln dargestellt werden: 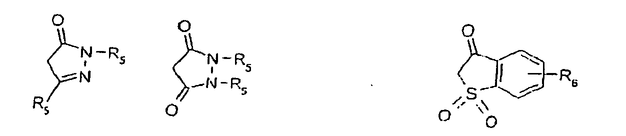 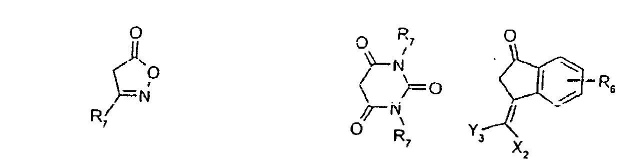 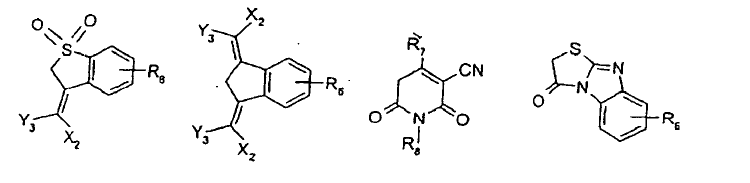
worin R₅ aus Wasserstoff, (C₁-C₆)-Alkyl, substituiertem (C₁-C₆)-Alkyl, (C₃-C₈)-Cycloalkyl und Aryl ausgewählt ist;
worin R₆ ausgewählt ist aus Wasserstoff, (C₁-C₆)-Alkyl, (C₁-C₆)-Alkoxy, Halogen, Cyano, (C₁-C₆)-Alkoxycarbonyl, Trifluormethyl, Hydroxy, (C₁-C₆)-Alkanoyloxy, Aroyl, (C₁-C₆)-Alkylthio, (C₁-C₆)-Alkylsulfonyl, Carbamoyl, Sulfamoyl, -NHCOR₉, -NHSO₂R₉, -CONHR₉, CON(R₉)₂, -SO₂NHR₉ und -SON₂(R₉)₂; worin R₉ aus (C₁-C₆)-Alkyl, substituiertem (C₁-C₆)-Alkyl, (C₃-C₈)-Cycloalkyl und Aryl ausgewählt ist;
worin R₇ aus Wasserstoff, (C₁-C₆)-Alkyl und Aryl ausgewählt ist,
worin X₂ und Y₃ unabhängig aus Cyano, (C₁-C₆)-Alkylsulfony, Arylsulfonyl und (C₁-C₆)-Alkoxycarbonyl ausgewählt sind;
worin R₈ aus Wasserstoff, (C₁-C₆)-Alkyl, substituiertem (C₁-C₆)-Alkyl, (C₃-C₈)-Cycloalkyl, (C₃-C₈)-Alkenyl, (C₃-C₈)-Alkinyl und Aryl ausgewählt sind.

11. Verfahren nach Anspruch 10, bei dem das Additiv eine Verbindung der Formel: 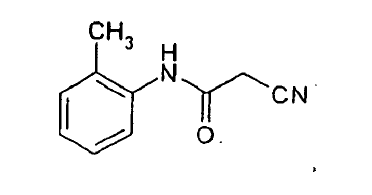 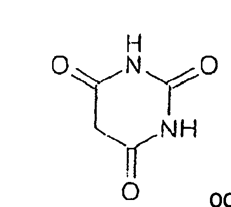 oder

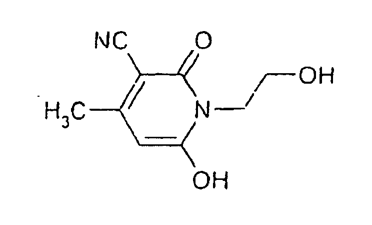

## Revendications

1. Composition de polyester comprenant :
(a) un polyester ;
(b) au moins un additif qui est capable de réagir avec l'acétaldéhyde pour former une nouvelle liaison carbone-carbone, ledit additif étant choisi parmi les composés de méthylène actif acryliques représentés par les formules suivantes : 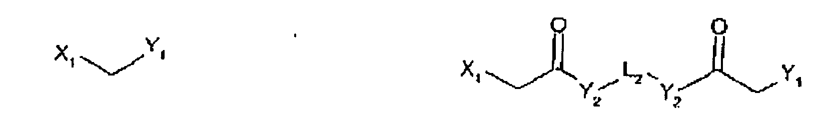 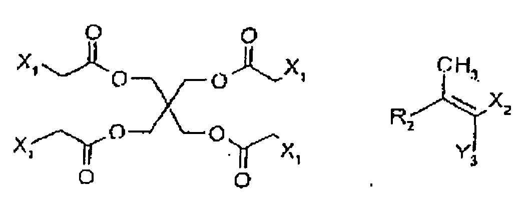 dans lesquelles X₁ et Y₁ représentent chacun un groupement attracteur d'électron et sont choisis indépendamment parmi un aryle, un carbamoyle, un cyano, un hétéroaryle, un nitro, un sulfamoyle, un R₁-CO-, un R₁O-CO-, un R₁NHCO-, un (R₁)₂N-CO-, un HO-L₂NHCO-, un (HO-L₂)₂N-CO-, un R₁-O₂S-, un R₁-NHO₂S-, et un (R₁)₂NO₂S-, dans lesquels R₁ est choisi parmi un alkyle en C₁-C₂₂, un alkyle en C₁-C₂₂ substitué, un cycloalkyle en C₃-C₈, un cycloalkyle en C₃-C₈ substitué, un alcényle en C₃-C₈, un alcinyle en C₃-C₈, un aryle, un hétéroaryle ; dans lesquels L₂ est un groupement de liaison divalent choisi parmi un alkylène en C₁-C₂₂, un cycloalkylène en C₃-C₈, un alkylène en C₁-C₆-cyclohexylène-alkylène en C₁-C₆, un alkylène en C₂-C₄-O-arylène-O-alkylène en C₂-C₄, un arylène et un -(CH₂CH₂-L₃)₁₋₃-CH₂CH₂-, dans lequel L₃ est choisi parmi un -O-, un -S-, un -SO₂-, et un -N(R₁) - ;
dans lesquelles Y₂ est choisi parmi un -O-, un -NH-, et un -N(R₁) - ;
dans lesquelles X₂ et Y₃ sont choisis indépendamment parmi un cyano, un alkylsulfonyle en C₁-C₆, un arylsulfonyle et un alcoxycarbonyle en C₁-C₆; dans lesquelles R₂ est choisi parmi un aryle et un hétéroaryle ; et
(c) un composé connu pour catalyser la réaction entre un méthylène acide et un aldéhyde choisi parmi le groupe consistant en des stabilisants à la lumière de type amine encombrée (HALS : hindered amine light stabilizer), des acides aminés, des sels de métal alcalin d'acides mono- ou poly-carboxyliques, des amines tertiaires et des amines secondaires.

2. Composition de polyester comprenant :
(a) un polyester ; et
(b) au moins un additif qui est capable de réagir avec l'acétaldéhyde pour former une nouvelle liaison carbone-carbone, ledit additif étant choisi parmi les composés de méthylène actif acryliques représentés par les formules suivantes : 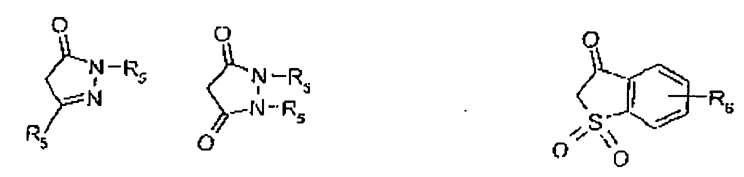 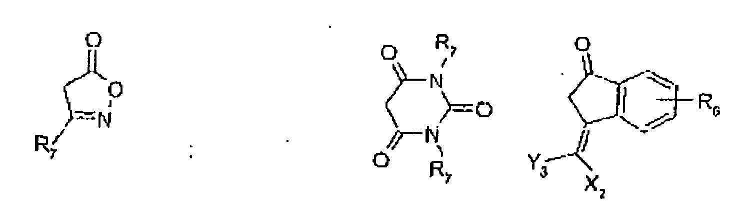 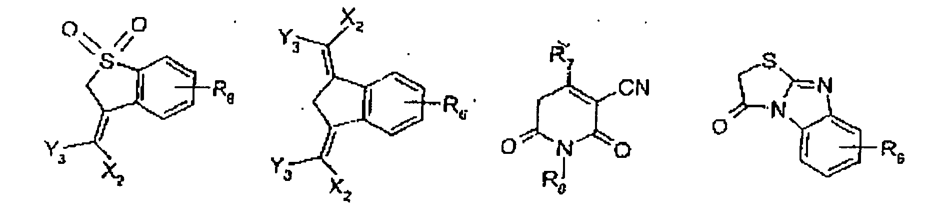 dans lesquelles R₅ est choisi parmi un hydrogène, un alkyle en C₁-C₆, un alkyle en C₁-C₆ substitué, un cycloalkyle en C₃-C₈ et un aryle ;
dans lesquelles R₆ est choisi parmi un hydrogène, un alkyle en C₁-C₆, un alcoxy en C₁-C₆, un halogène, un cyano, un alcoxycarbonyle en C₁-C₆, un trifluorométhyle, un hydroxy, un alcanoyloxy en C₁-C₆, un aroyle, un alkylthio en C₁-C₆, un alkylsulfonyle en C₁-C₆, un carbamoyle, un sulfamoyle, un -NHCOR₉, un -NHSO₂R₉, un -CONHR₉, un -CON(R₉)₂, un -SO₂NHR₉ et un -SON₂(R₉)₂ ; dans lesquels R₉ est choisi parmi un alkyle en C₁-C₆, un alkyle en C₁-C₆ substitué, un cycloalkyle en C₃-C₈ et un aryle ;
dans lesquelles R₇ est choisi parmi un hydrogène, un alkyle en C₁-C₆ et un aryle ;
dans lesquelles X₂ et Y₃ sont choisis indépendamment parmi un cyano, un alkylsulfonyle en C₁-C₆, un arylsulfonyle et un alcoxycarbonyle en C₁-C₆ ;
dans lesquelles R₈ est choisi parmi un hydrogène, un alkyle en C₁-C₆, un alkyle en C₁-C₆ substitué, un cycloalkyle en C₃-C₈, un alcényle en C₃-C₈, un alcinyle en C₃-C₈ et un aryle.

3. Composition selon la revendication 1 ou 2, comprenant en outre 1 à 99 pour cent en poids d'un matériau recyclé après consommation.

4. Composition selon la revendication 1 ou 2, comprenant en outre 0,01 à 10 pour cent en poids d'au moins une matière colorante et/ou d'un composé d'absorption de la lumière ultraviolette dans le polyester.

5. Composition selon la revendication 1 ou 2, comprenant en outre un composé d'absorption infrarouge choisi parmi le noir de carbone, l'oxyde de fer noir, des résidus de catalyseur métallique d'antimoine réduit, et des composés d'absorption infrarouge dans le polyester.

6. Composition selon la revendication 1 ou 2, comprenant en outre un additif anti-adhérent choisi parmi des lubrifiants, des composites minéraux non organiques, et le talc.

7. Composition selon la revendication 2 dans laquelle l'additif est un composé de formule : 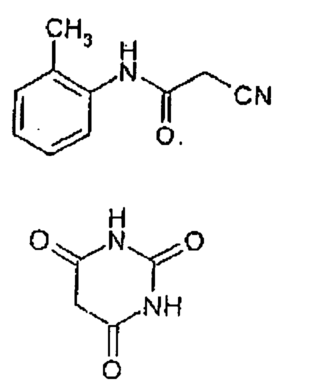 ou

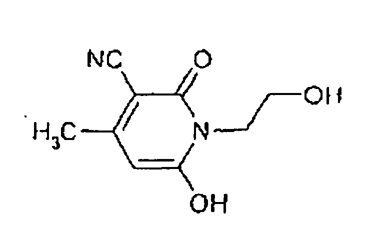

8. Article formé ou conformé constitué de la composition selon la revendication 1 ou 2.

9. Procédé destiné à réduire la quantité d'acétaldéhyde dans une composition de polyester, qui comprend de mélanger à l'état fondu dans la composition de polyester au moins un additif qui est capable de réagir avec l'acétaldéhyde pour former une nouvelle liaison carbone-carbone, ledit additif étant choisi parmi des composés de méthylène actif acryliques représentés par les formules suivantes : 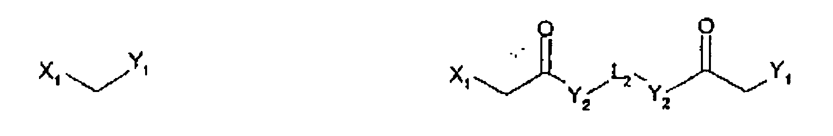 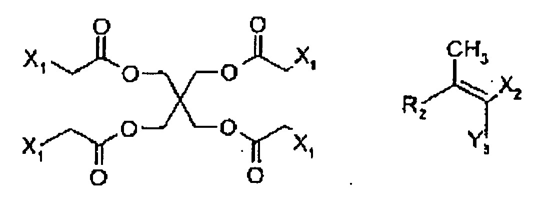 dans lesquelles X₁ et Y₁ représentent chacun un groupement attracteur d'électron et sont choisis indépendamment parmi un aryle, un carbamoyle, un cyano, un hétéroaryle, un nitro, un sulfamoyle, un R₁-CO-, un R₁O-CO-, un R₁NHCO-, un (R₁)₂N-CO-, un HO-L₂NHCO-, un (HO-L₂)₂N-CO-, un R₁-O₂S-, un R₁-NHO₂S-, et un (R₁)₂NO₂S-, dans lesquels R₁ est choisi parmi un alkyle en C₁-C₂₂, un alkyle en C₁-C₂₂ substitué, un cycloalkyle en C₃-C₈, un cycloalkyle en C₃-C₈ substitué, un alcényle en C₃-C₈, un alcinyle en C₃-C₈, un aryle, un hétéroaryle ; dans lesquels L₂ est un groupement de liaison divalent choisi parmi un alkylène en C₁-C₂₂, un cycloalkylène en C₃-C₈, un alkylène en C₁-C₆-cyclohexylène-alkylène en C₁-C₆, un alkylène en C₂-C₄-O-arylène-O-alkylène en C₂-C₄, un arylène et un -(CH₂CH₂-L₃)₁₋₃-CH₂CH₂-, dans lequel L₃ est choisi parmi un -O-, un -S-, un -SO₂-, et un -N(R₁) - ;
dans lesquelles Y₂ est choisi parmi un -O-, un -NH-, et un -N(R₁) - ;
dans lesquelles X₂ et Y₃ sont choisis indépendamment parmi un cyano, un alkylsulfonyle en C₁-C₆, un arylsulfonyle et un alcoxycarbonyle en C₁-C₆ ;
dans lesquelles R₂ est choisi parmi un aryle et un hétéroaryle ; et
(c) un composé connu pour catalyser la réaction entre un méthylène acide et un aldéhyde choisi parmi le groupe consistant en des stabilisants à la lumière de type amine encombrée (HALS : hindered amine light stabilizer), des acides aminés, des sels de métal alcalin d'acides mono- ou poly-carboxyliques, des amines tertiaires et des amines secondaires.

10. Procédé destiné à réduire la quantité d'acétaldéhyde dans une composition de polyester, qui comprend de mélanger à l'état fondu dans la composition de polyester au moins un additif qui est capable de réagir avec l'acétaldéhyde pour former une nouvelle liaison carbone-carbone, ledit additif choisi parmi des composés de méthylène actif acryliques représentés par les formules suivantes : 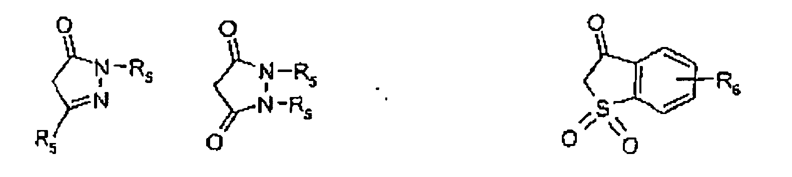 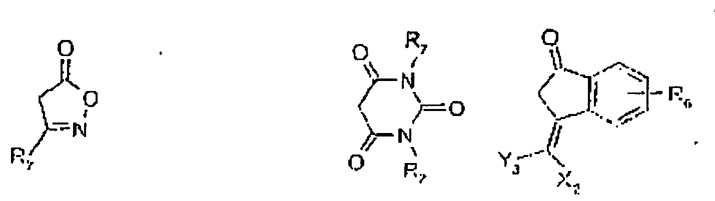 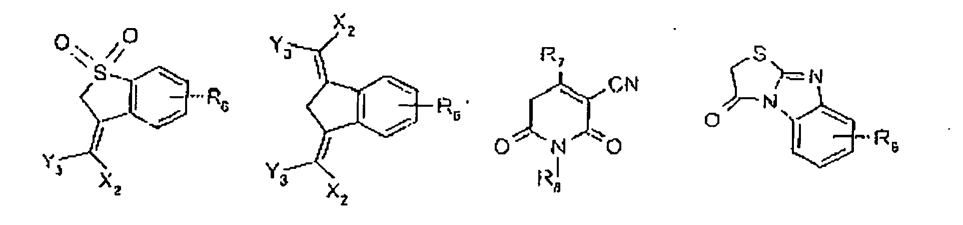 dans lesquelles R₅ est choisi parmi un hydrogène, un alkyle en C₁-C₆, un alkyle en C₁-C₆ substitué, un cycloalkyle en C₃-C₈ et un aryle ;
dans lesquelles R₆ est choisi parmi un hydrogène, un alkyle en C₁-C₆, un alcoxy en C₁-C₆, un halogène, un cyano, un alcoxycarbonyle en C₁-C₆, un trifluorométhyle, un hydroxy, un alcanoyloxy en C₁-C₆, un aroyle, un alkylthio en C₁-C₆, un alkylsulfonyle en C₁-C₆, un carbamoyle, un sulfamoyle, un -NHCOR₉, un -NHSO₂R₉, un -CONHR₉, un -CON(R₉)₂, un -SO₂NHR₉ et un -SON₂(R₉)₂ ; dans lesquels R₉ est choisi parmi un alkyle en C₁-C₆, un alkyle en C₁-C₆ substitué, un cycloalkyle en C₃-C₈ et un aryle ;
dans lesquelles R₇ est choisi parmi un hydrogène, un alkyle en C₁-C₆ et un aryle ;
dans lesquelles X₂ et Y₃ sont choisis indépendamment parmi un cyano, un alkylsulfonyle en C₁-C₆, un arylsulfonyle et un alcoxycarbonyle en C₁-C₆ ;
dans lesquelles R₈ est choisi parmi un hydrogène, un alkyle en C₁-C₆, un alkyle en C₁-C₆ substitué, un cycloalkyle en C₃-C₈, un alcényle en C₃-C₈, un alcinyle en C₃-C₈ et un aryle.

11. Procédé selon la revendication 10, dans laquelle l'additif est un composé de formule : 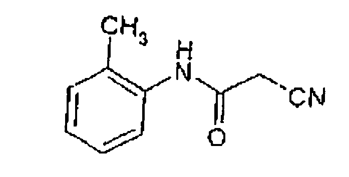 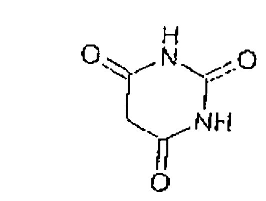 ou
